(19) Europäisches Patentamt
European Patent Office
Office européen des brevets

(11) **EP 2 645 136 B1**

(12) **EUROPEAN PATENT SPECIFICATION**

(45) Date of publication and mention
of the grant of the patent:
**18.01.2017   Bulletin 2017/03**

(51) Int Cl.:
***G02B 1/118*** *(2015.01)*          ***G02B 1/111*** *(2015.01)*
***G02B 1/02*** *(2006.01)*          ***C03C 17/42*** *(2006.01)*

(21) Application number: **13001164.6**

(22) Date of filing: **08.03.2013**

(54) **Optical member having textured structure and method of producing same**

Optisches Element mit texturierter Struktur und Verfahren zu dessen Herstellung

Élément optique ayant une structure texturée et son procédé de production

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2012   JP 2012077502**

(43) Date of publication of application:
**02.10.2013   Bulletin 2013/40**

(73) Proprietor: **Canon Kabushiki Kaisha
Ohta-ku
Tokyo (JP)**

(72) Inventors:
 • **Shiki, Mika**
  **Tokyo (JP)**
 • **Nakayama, Tomonari**
  **Tokyo (JP)**
 • **Asami, Eiko**
  **Tokyo (JP)**

(74) Representative: **WESER & Kollegen
Radeckestraße 43
81245 München (DE)**

(56) References cited:
 **WO-A1-2011/140018      GB-A- 2 112 301
 US-A- 5 624 604      US-A1- 2008 310 026**

 • **M.E. KARAMAN ET AL: "The production of stable
 hydrophobic surfaces by the adsorption of
 hydrocarbon and fluorocarbon carboxylic acids
 onto alumina substrates", COLLOIDS AND
 SURFACES A: PHYSICOCHEMICAL AND
 ENGINEERING ASPECTS, vol. 182, no. 1-3, 30
 June 2001 (2001-06-30), pages 285-298,
 XP055072091, ISSN: 0927-7757, DOI:
 10.1016/S0927-7757(00)00821-9**
 • **J. VAN DEN BRAND ET AL: "Interaction of
 Anhydride and Carboxylic Acid Compounds with
 Aluminum Oxide Surfaces Studied Using Infrared
 Reflection Absorption Spectroscopy",
 LANGMUIR, vol. 20, no. 15, 18 June 2004
 (2004-06-18) , pages 6308-6317, XP055072664,
 ISSN: 0743-7463, DOI: 10.1021/la0496845**

EP 2 645 136 B1

**Description**

BACKGROUND OF THE INVENTION

Field of the Invention

The present invention relates to an optical member and a method of producing the optical member. More specifically, the present invention relates to an optical member that can exhibit satisfactory optical characteristics over a wide wavelength region and can maintain the satisfactory optical characteristics under various operating environments and a method of producing the optical member.

Description of the Related Art

It is known that an antireflection structure having a fine structure of not larger than the visible light wavelength shows excellent antireflection performance in a wide wavelength region when the fine structure has an appropriate pitch and height.
It is also known that boehmite, an aluminum oxide hydroxide, grown on a substrate exhibits a high antireflection effect. In these methods, an antireflection coating is formed by subjecting an aluminum oxide (alumina) coating formed by vacuum deposition or liquid phase process (sol-gel process) to steam treatment or hot-water immersion treatment to form a fine structure on the surface layer through growth of boehmite. In particular, in an antireflection coating utilizing a fine structure of boehmite, the reflectances in normal incidence and oblique incidence are significantly low, and thus give an excellent antireflection performance (Japanese Patent Laid-Open No. 2005-275372).
However, in the antireflection coating having a fine structure produced by such process, the control of the structure and size is restricted. Accordingly, in order to further enhance the antireflection performance, Japanese Patent Laid-Open Nos. 2006-259711, 2008-203827, and 2008-233880 describe optimization of the refractive index structure, provision of a refractive index ni layer for preventing influence of any glass material, and addition of a phosphate compound to an aluminum oxide layer.
M. E. KARAMAN et al, COLLOIDS AND SURFACES A: PHYSICOCHEMICAL AND ENGINEERING ASPECTS, vol 182, no. 1-3, 30 June 2001, pages 285-298 discloses the production of stable hydrophobic surfaces by the absorption of hydrocarbon and fluorocarbon carboxylic acids onto alumina substrates.
WO 2011/140018 A1 discloses antireflective films comprising a high refractive index layer and a low refractive index layer disposed on the high refractive index layer.

SUMMARY OF THE INVENTION

Accordingly, it is demanded to reduce the reflectance in a further wide wavelength region in light of more strict product performance such as high quality stability during the production and low variations in various environmental tests.
Embodiments of the present invention are directed to an optical member having a low reflectance in a wide wavelength region and also showing satisfactory optical characteristics under operating environments; and a method of producing the optical member.
The present invention discloses an optical member having a configuration described below and a method of producing the optical member.
The present invention in its first aspect discloses an optical member as specified in claims 1 to 4.
The present invention in its second aspect discloses a method of producing an optical member as specified in claims 5 and 6.
The present invention discloses an optical member having a low reflectance in a wide wavelength region and also showing satisfactory optical characteristics under operating environments and discloses a method of producing the optical member.
Further features of the present invention will become apparent from the following description of exemplary embodiments with reference to the attached drawings.

BRIEF DESCRIPTION OF THE DRAWINGS

Figs. 1A to 1C are schematic diagrams illustrating optical members according to an embodiment of the present invention.
Figs. 2A and 2B are schematic diagrams explaining a relationship between a substrate and a textured structure containing aluminum oxide crystals of the present invention.

Figs. 3A to 3C are process diagrams showing a method of producing the optical member according to an embodiment of the present invention.

Fig. 4 is a schematic diagram illustrating an optical member according to another embodiment of the present invention.

Figs. 5A and 5B are graphs showing absolute reflectances in the wavelength range of 400 to 700 nm of antireflection coatings formed on glass in Example 5 and Comparative Example 1, respectively.

Figs. 6A and 6B are graphs showing absolute reflectances in the wavelength range of 400 to 700 nm of antireflection coatings formed on glass in Example 6 and Comparative Example 4, respectively.

Fig. 7 is a schematic diagram illustrating an optical member according to another embodiment of the present invention.

Fig. 8 is an electron micrograph of the surface of an optical member according to another embodiment of the present invention.

DESCRIPTION OF THE EMBODIMENTS

The present invention will now be described in detail.

The optical member of the present invention has an antireflection coating on a substrate. The outermost layer of the antireflection coating is a crystalline layer having a textured structure containing aluminum oxide crystals. The surface of the crystalline layer has a textured structure (protrusion structure), and part or the entire of the crystalline layer contains a carboxylic acid compound. The aluminum oxide crystals are mainly composed of aluminum oxide and include an oxide or hydroxide of aluminum or a hydrate thereof at 50 wt% or more. The textured structure containing the aluminum oxide crystals consists of spaces and structures (protrusions) containing aluminum oxide crystals at 50 wt% or more.

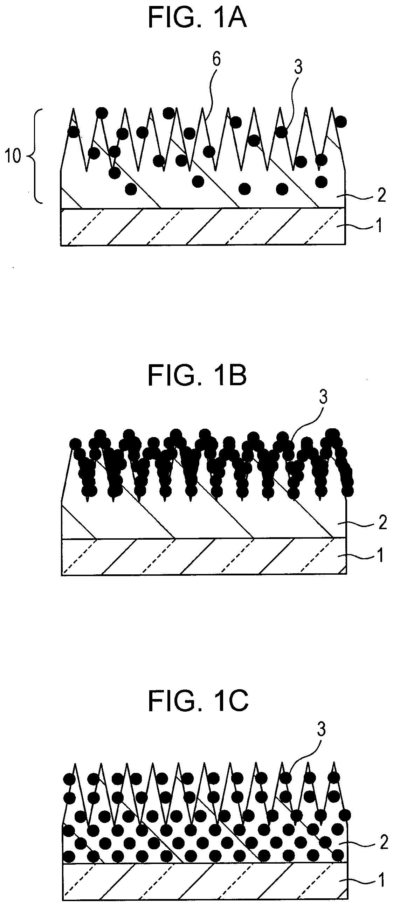

Figs. 1A to 1C are schematic diagrams illustrating optical members according to an embodiment of the present invention. The optical member of the present invention includes an antireflection coating 10 disposed on a substrate 1. In the optical member of the present invention shown in Fig. 1A, a crystalline layer 2 having a textured structure containing aluminum oxide crystals is disposed on a substrate 1. The textured structure has a large number of protrusions 6 (structure containing aluminum oxide crystals at 50 wt% or more). The crystalline layer 2 having a textured structure contains a carboxylic acid compound 3. The antireflection coating 10 is constituted of the crystalline layer 2.

The crystalline layer 2 having a textured structure contains a carboxylic acid compound, which means that part of the crystalline layer 2 having a textured structure contains the carboxylic acid compound or that the entire of the crystalline layer 2 having a textured structure contains the carboxylic acid compound. In the case where part of the crystalline layer 2 having a textured structure contains a carboxylic acid compound, for example, as shown in Fig. 1A, the carboxylic acid compound is scattered on part of the surface of the crystalline layer 2 and/or is present in part of the crystalline layer 2 from the surface toward the substrate 1. The carboxylic acid compound may be contained in the entire of the crystalline layer 2 having a textured structure. In the case where the entire of the crystalline layer 2 having a textured structure contains a carboxylic acid compound, for example, as shown in Fig. 1B, the carboxylic acid compound covers the whole surface layer of the crystalline layer 2 or, as shown in Fig. 1C, the carboxylic acid compound is present in the crystalline layer 2 from the surface toward the substrate 1 to reach the substrate 1.

In the present invention, the crystalline layer 2 having a textured structure can reduce light reflection occurring on the substrate 1, and the crystalline layer 2 having a textured structure containing a carboxylic acid compound 3 can have characteristics showing a low reflection in a wider wavelength region.

The crystalline layer having a textured structure used in the present invention is an antireflection coating having a nano structure of a certain material and having an apparent refractive index that is lower than the inherent refractive index of the material and varies in the thickness direction of the coating. The material can be aluminum oxide.

Specifically, the low reflection characteristics are realized by a fine structure having a smaller size than the wavelength used in an optical component to which the antireflection coating is applied. The fine structure includes a plurality of closed spaces closed from the outside atmosphere or a plurality of open spaces opened to the outside atmosphere. In the antireflection coating, the refractive index (the inherent refractive index) of the material constituting the antireflection coating and the refractive index of the medium such as the air occupying (filling) the spaces are averaged. As a result, the antireflection coating has a refractive index lower than the refractive index (inherent refractive index) of the material constituting the antireflection coating. Thus, the apparent refractive index of the antireflection coating can be reduced. That is, the inherent refractive index of a material is the refractive index of a non-porous thin coating or balk of the material, and the apparent refractive index is the refractive index reduced by means of the spaces formed in a coating having a fine structure.

The apparent refractive index can be changed by varying the occupancy rate of the spaces or the occupancy rate of the solid portions in the coating in the thickness direction.

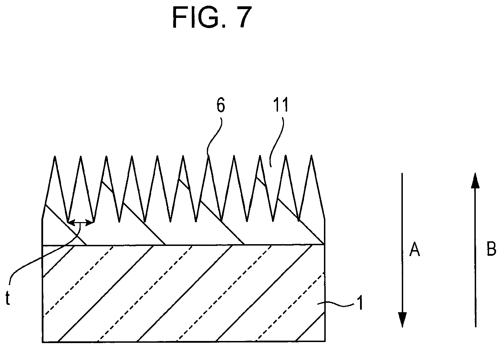

Fig. 7 is a diagram schematically illustrating a cross section of an antireflection coating used in the present invention. The antireflection coating includes solid portions (protrusions) 6 and spaces 11. The apparent refractive index can be intermittently or continuously increased from the incidence side of light along the light travelling direction (direction of the arrow A). Alternatively, the apparent refractive index can be intermittently or continuously decreased from the incidence side of light along the light travelling direction (direction of the arrow B). In particular, the antireflection coating can have optical characteristics such that the outermost surface being in contact with the outer atmosphere of the antireflection coating has a refractive index of approximately 1 and that the refractive index gradually increases along the depth from the outermost surface in the coating thickness direction of the antireflection coating so as to approximate the inherent refractive index (e.g., 1.4 to 3.0) of the material constituting the antireflection coating.

The antireflection coating may have a structure formed by stacking at least two layers having fine structures of which occupancy rates of the spaces or solid portions are different from each other or may have a structure having a space or solid portion distribution such that the occupancy rate thereof varies. On the outermost surface side of the antireflection coating, the spaces communicate with the outside atmosphere to provide an unsmooth fine textured structure. The height (h) of the convex portion (protrusion) is smaller than the wavelength used and specifically is in a nano-order size.

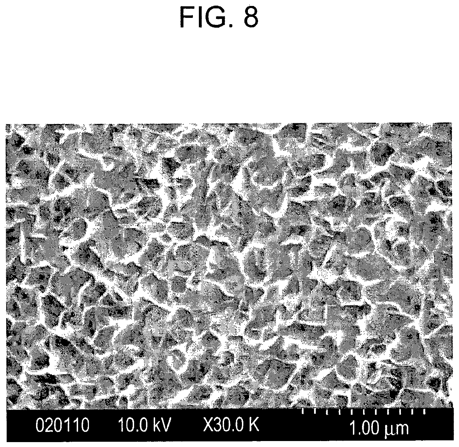

Such a fine textured structure is expressed as a moth eye structure, sub-wavelength structure (SWS), sponge-like structure, petaloid structure, fabric structure, spiny structure, or beard-like structure (see Figs. 7 and 8 and Japanese Patent Laid-Open Nos. 09-202649, 2005-275372, and 2006-259711). Fig. 8 is an electron micrograph of the surface of an optical member according to an embodiment of the present invention.

Examples of the material used in the solid portion include metal oxides such as silicon oxide, zinc oxide, titanium oxide, magnesium oxide, zirconium oxide, and aluminum oxide; metal fluorides such as magnesium fluoride; metal compounds such as metal fluoride oxides and metal hydroxides; and those containing them. The metal element is not limited to one type, and a metal compound of multi-element system, i.e., a binary or ternary compound system, can also be used. Furthermore, these solid materials may contain, for example, phosphorus or boron.

The crystalline structure of the solid portion is not particularly limited and may be amorphous, fine crystalline, polycrystalline, or monocrystalline or an amorphous structure containing these crystals.

The antireflection coating is produced by forming a solid coating by vacuum deposition, sputtering, a gas phase method represented by CVD, or a liquid phase method such as a sol-gel method, a coating method, or spraying and subjecting the solid coating to a surface treatment such as heat treatment or hot-water treatment to form a fine textured structure (protrusions) on the surface.

For example, an amorphous aluminum oxide coating is formed on a substrate by a sol-gel method, and the coating is brought into contact with hot water or water vapor. As a result, plate crystals of aluminum oxide, which is also called boehmite, aluminum hydroxide, or a hydrate thereof grow to provide a petaloid fine textured structure (protrusions).

In addition, an intermediate layer may be disposed between the antireflection coating having the fine textured structure (protrusions) and the substrate. The intermediate layer can be a solid coating having a median refractive index between the apparent refractive index of the antireflection coating and the refractive index of the substrate. Specific examples of the material for the intermediate layer include inorganic materials such as metal compounds mentioned as the materials for the antireflection coating and organic materials such as resins represented by polyimide.

The aluminum oxide crystals constituting the crystalline layer 2 having a textured structure are formed of an oxide or hydroxide of aluminum or a hydrate thereof. In particular, the crystals can be boehmite. These crystals arranged in the crystalline layer 2 form fine protrusions with their edges. Accordingly, the crystals are selectively arranged at a specific angle with respect to the substrate surface for increasing the heights of the protrusions and narrowing the distances between the protrusions.

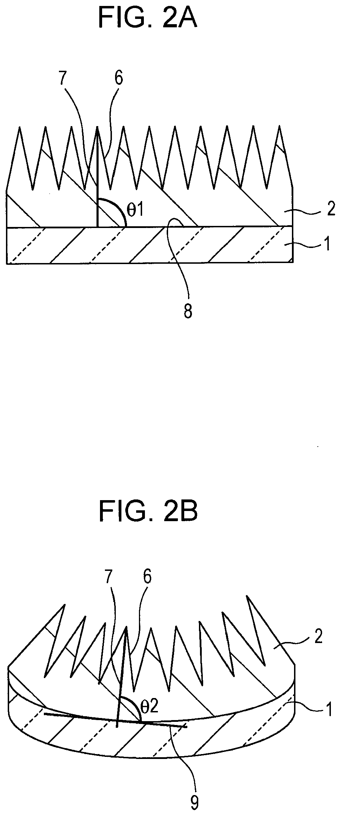

Figs. 2A and 2B are schematic diagrams explaining a relationship between a textured structure containing aluminum oxide crystals of the present invention and a substrate. When the substrate has a flat surface such as a plate, film, or sheet, as shown in Fig. 2A, the protrusions 6 are arranged with respect to the substrate such that the average of angles $\theta 1$ between the tilt directions 7 of the protrusions 6 and the substrate surface 8 is 45° or more and 90° or less, such as 60° or more and 90° or less.

When the substrate has a two-dimensional flat surface as shown in Fig. 2A, or three-dimensional curved surface as shown in Fig. 2B, the protrusions 6 are arranged with respect to the substrate such that an average of angles $\theta 2$ between the tilt directions 7 of the protrusions 6 and a tangent 9 to any point on the substrate surface is equal to or greater than 45° and equal to or less than 90°. For example, the average of angles $\theta 2$ between the tilt directions 7 of the protrusions 6 and the tangent 9 to any point on the substrate may be between 60° and 90° including both 60° and 90°. The angles $\theta 1$ and $\theta 2$ may exceed 90° depending on the tilt of a protrusion 6. In such a case, the angle measured so as to be 90° or less is used.

The thickness of the crystalline layer 2 having a textured structure can be 20 nm or more and 1000 nm or less. For example, the thickness may be range between 50 nm and 1000 nm. When the thickness of the crystalline layer 2 having a textured structure is 20 nm or more and 1000 nm or less, the antireflection performance by the textured structure is effective, the protrusions do not have a risk of impairing their mechanical strength, and such a thickness is advantageous for the manufacturing cost of the textured structure. A thickness of 50 nm or more and 1000 nm or less can further enhance the antireflection performance.

The surface density of the textured structure is also important, and the average surface roughness Ra' value, which corresponds to the surface density and is obtained by planar extension of the center line average roughness, can be 5 nm or more, such as 10 nm or more, and particularly 15 nm or more and 100 nm or less. The surface area ratio $S_r$ is 1.1 or more, such as 1.15 or more, and particularly 1.2 or more and 3.5 or less.

The resulting protrusion structure can be evaluated by, for example, observation of the fine protrusion structure surface with a scanning probe microscope, and this observation can provide the average surface roughness Ra' value by planar extension of the center line average roughness Ra of the coating and the surface area ratio $S_r$. That is, the average surface roughness Ra' value (nm) is obtained by applying the center line average roughness Ra defined in JIS B0601 to a measuring surface for three-dimensional extension and is expressed as "an average value of the absolute values of the deviation from a standard face to a designated face" and is given by the following Expression (1):

$$\mathrm{Ra'} = \frac{1}{S_0} \int_{Y_B}^{Y_T} \int_{X_L}^{X_R} \left| F(X,Y) - Z_0 \right| d_X \; d_Y \qquad (1)$$

Ra': average surface roughness value (nm),
$S_0$: area when the measuring surface is ideally flat, $|X_R\text{-}X_L| \times |Y_T\text{-}Y_B|$,
F(X,Y): height at measuring point (X,Y), X is the X-coordinate, and Y is the Y-coordinate,
$X_L$ to $X_R$: range of the X-coordinate of the measuring surface,
$Y_B$ to $Y_T$: range of the Y-coordinate of the measuring surface, and
$Z_0$: average height in the measuring surface.

The surface area ratio $S_r$ is determined by $S_r = S/S_0$ ($S_0$: area when the measuring surface is ideally flat, S: surface area of an actual measuring surface). The surface area of an actual measuring surface is determined as follows. First, the surface is divided into minute triangles formed by most neighboring three data points (A,B,C), and the area $\Delta S$ of each minute triangle is determined by the vector product: $\Delta S$ ($\Delta ABC$) = $[s(s\text{-}AB)(s\text{-}BC)(s\text{-}AC)]^{0.5}$ [wherein, AB, BC, and AC represent the lengths of the respective sides, s = 0.5 $\times$ (AB + BC + AC)]. The sum of the areas $\Delta S$ is the surface area S to be determined. When the surface density of a textured structure has an Ra' of 5 nm or more and an Sr of 1.1 or more, the textured structure can exhibit an antireflection effect. In the case of an Ra' of 10 nm or more and an $S_r$ of 1.15 or more, the antireflection effect is higher than that of the former, and in the case of an Ra' of 15 nm or more and an $S_r$ of 1.2 or more, the antireflection performance becomes a level that can be actually used. However, in the case of an Ra' of 100 nm or more and an $S_r$ of 3.5 or more, the scattering effect by the textured structure is higher than the antireflection effect thereof, resulting in insufficient antireflection performance.

The carboxylic acid compound 3 of the present invention can have a high affinity to aluminum oxide constituting the crystalline layer 2 having a textured structure or can be present in the state where its carboxyl groups of the carboxylic acid compound are conjugated. The carboxylic acid compound can be present as a carboxylate with aluminum oxide constituting the crystalline layer 2 having a textured structure and/or in a state of carboxylic acid compound molecules coupled with each other and/or as a free carboxylic acid compound without coupling with other molecules.

The carboxylic acid compound 3 present in the above-mentioned states in the crystalline layer 2 having a textured structure causes a slight change in the electronic state of the crystalline layer 2 having a textured structure. This is believed to slightly change the refractive index structure of the crystalline layer 2 having a textured structure and thereby decrease the reflectance in a wide wavelength region compared with the case where the crystalline layer 2 having a textured structure does not contain the carboxylic acid compound 3.

The crystalline layer 2 having a textured structure is constituted of crystals mainly composed of an oxide or hydroxide of aluminum or a hydrate thereof. Accordingly, it is believed that the carboxylic acid acts on the hydroxyl group or the hydrate binding to aluminum to form a metastable state such as an ionic bond or a coordinate bond. That is, it is believed that carboxylates are formed between part or the entire of the crystalline layer 2 having a textured structure and part or the entire of the carboxylic acid compound 3 to enhance the chemical stability of the crystalline layer 2 having a textured structure. This is believed to be caused by that contamination materials are prevented from adsorbing to the textured structure constituted of boehmite formed on the surface layer of aluminum oxide. As a result, an effect of preventing a change over time in refractive index, which is caused by partial deterioration of the fine structure or adsorption of other types of compounds, can be further expressed.

In addition, for example, the free carboxylic acid compound present in part or the entire of the crystalline layer 2 having a textured structure is similarly expected to be formed into a metastable carboxylate against the instability of the aluminum oxide due to a change in environment.

Examples of the carboxylic acid compound include monovalent to multivalent linear saturated or unsaturated hydrocarbon carboxylic acid compounds, monovalent to multivalent cyclic saturated or unsaturated hydrocarbon carboxylic acid compounds, and monovalent to multivalent aromatic carboxylic acid compounds.

Specific examples of the carboxylic acid compound include oxalic acid, malonic acid, succinic acid, glutaric acid, adipic acid, pimelic acid, suberic acid, azelaic acid, sebacic acid, phthalic acid, isophthalic acid, terephthalic acid, polyacrylic acid, meso-2,3-dimercaptosuccinic acid, meso-butane-1,2,3,4-tetracarboxylic acid, tetrahydrofuran-2,3,4,5-tetracarboxylic acid, 1,2,3,4-cyclopentanetetracarboxylic acid, tetrafluorosuccinic acid and fumaric acid. Among these carboxylic acid compounds, those soluble in water or a solvent miscible with water can be particularly used.

In particular, the use of a carboxylic acid compound having two or more carboxyl groups in one molecule can provide the following three effects: an increase in probability of reaction with an oxide or hydroxide of aluminum or a hydrate thereof mainly constituting the crystalline layer 2 having a textured structure in the production process; an increase in apparent molecular size by hydrogen bonds between carboxylic acid molecules to cause a larger change in the electronic state, which changes the refractive index structure determining reflectance; and an increase in affinity of the carboxylic acid compound to aluminum oxide mainly constituting the crystalline layer 2 having a textured structure when the carboxylic acid compound is added to the crystalline layer 2.

The carboxylic acid compound can have at least one hydroxyl group in its molecule. Examples of the carboxylic acid compound having at least one hydroxyl group include malic acid, tartaric and citric acid. The hydroxyl group is believed to further effectively acts in the effects described in the compound having two or more carboxyl groups in the molecule.

These carboxylic acid compounds may be used in combination of two or more thereof from the viewpoints of changes in reflectance and shape in the production process and changes in optical characteristics under various environments.

The method of producing the optical member of the present invention will now be described in detail.

The method of producing the optical member according to the present invention produces an optical member having an antireflection coating disposed on a substrate and includes the following four steps of:

(a) forming an aluminum oxide layer containing aluminum oxide on a substrate;
(b) forming a crystalline layer having a textured structure by bringing the aluminum oxide layer into contact with hot water of 60°C or more and 100°C or less or water vapor;
(c) applying a coating liquid containing a carboxylic acid compound and a solvent onto the crystalline layer; and
(d) removing the solvent of the coating liquid.

The aluminum oxide layer containing aluminum oxide can be mainly composed of aluminum oxide, such as an aluminum oxide layer containing aluminum oxide at 50 wt% or more.

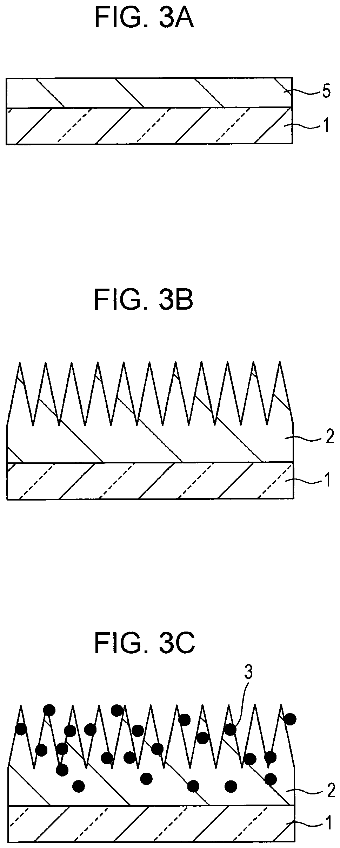

Figs. 3A to 3C are process diagrams showing a method of producing the optical member according to an embodiment of the present invention.

The term "aluminum oxide crystals" refers to crystals precipitating and growing on the surface of a coating containing aluminum oxide through, for example, peptization of the surface layer of the aluminum oxide coating by bringing the coating into contact with hot water or water vapor. The crystals are in the form of a fine textured structure. In the crystalline layer 2 having a textured structure, crystals having a variety of sizes are randomly arranged, and their top edges form protrusions. Therefore, in order to vary the heights, sizes, and angles of the protrusions and the distance between protrusions, the precipitation and growth of the crystals should be controlled.

Fig. 3A shows the step (a) of forming an aluminum oxide layer containing aluminum oxide on a substrate. That is, Fig. 3A shows the state where an aluminum oxide layer 5, i.e., a source of the crystalline layer having a fine textured structure constituted of aluminum oxide crystals in the present invention, is disposed on a substrate 1.

The aluminum oxide layer 5 may be formed by applying a coating liquid containing aluminum oxide prepared by, for example, a sol-gel method onto a substrate by spin coating, dip coating, spray coating, etc. Alternatively, the aluminum oxide layer 5 may be formed by sputtering or vapor deposition. In particular, from the viewpoint of allowing formation of a uniform antireflection layer on a substrate having a large area or a non-flat surface, application of a sol-gel coating liquid containing aluminum oxide can be performed. In the case of forming the coating by such an application method, drying by heating in an oven with internal air circulation, muffle furnace, or IH furnace or heating with an IR lump may be appropriately performed.

In addition, the aluminum oxide layer may contain an oxide such as $TiO_2$, $ZrO_2$, $SiO_2$, ZnO, or MgO as a different kind of component in the coating containing aluminum oxide. These methods allow formation of coatings having different textured structures in the step of forming crystals described below and allow control of the refractive indices of the coatings.

Fig. 3B shows the step (b) of forming a crystalline layer having a textured structure by bringing the aluminum oxide layer into contact with hot water or water vapor. Aluminum oxide crystals are formed by bringing the surface of the aluminum oxide coating into contact with hot water. The temperature of the hot water is in the range of 60°C or more and 100°C or less, and the coating is immersed in hot water for 5 minutes to 24 hours and is then dried.

In such a process of producing aluminum oxide crystals, an amorphous aluminum oxide layer may remain under the crystalline layer 2 having a textured structure.

The formation of a plate crystal layer having a textured structure containing aluminum oxide crystals on the surface by bringing an amorphous coating containing aluminum oxide into contact with hot water or water vapor can be performed by the process described in, for example, Japanese Patent Laid-Open No. 2006-259711 or 2005-275372.

Fig. 3C shows the step (c) of applying a coating liquid containing a carboxylic acid compound and a solvent onto the crystalline layer and the step (d) of removing the solvent of the coating liquid, i.e., the state where a carboxylic acid compound 3 in the present invention is disposed on part of the crystalline layer 2 having a textured structure.

The coating liquid containing the carboxylic acid compound is prepared by dissolving the above-mentioned carboxylic acid compound in a solvent in a concentration of 0.001 to 10 wt% or of 0.1 mM to 10 M. The amount of the carboxylic acid compound is determined in light of the desired reflectance or changes under various environments. A too large amount prevents realization of functions as an antireflection coating, and a too small amount cannot inhibit changes under a high-temperature and high humidity environment.

From the viewpoint of affinity to an oxide or hydroxide of aluminum or a hydrate thereof constituting the crystalline layer 2 having a textured structure, the solvent can be water. The solvent may be a highly hydrophilic solvent or an alcohol, diol, glycol, or ether solvent. These solvents may be used in combination from the viewpoints of coating properties and easiness in removal of the solvent described below.

The coating liquid containing carboxylic acid is applied onto the crystalline layer 2 having a textured structure by a method such as spin coating, dip coating, or spray coating. Subsequently, the solvent contained in the coating liquid is removed. Examples of the method of removing the solvent include a method of heating in an oven with internal air circulation, muffle furnace, or IH furnace or heating with an IR lump.

The optical member of the present invention may have a refractive index ni layer 4 between the substrate 1 and the crystalline layer 2 having a textured structure containing aluminum oxide crystals. The refractive index difference between the substrate 1 and the crystalline layer 2 having a textured structure can be adjusted by providing the refractive index ni layer 4.

The method of producing the optical member of the present invention may include a step of forming a refractive index layer before the formation of the aluminum oxide layer.

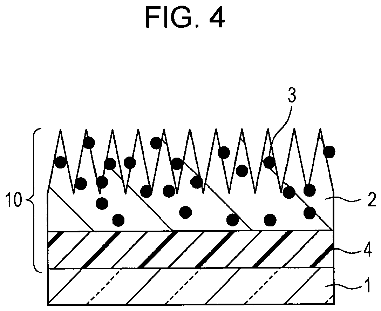

Fig. 4 shows an example of the optical member having a refractive index ni layer 4 between the substrate 1 and the crystalline layer 2 having a textured structure containing aluminum oxide crystals. The antireflection coating 10 on the substrate 1 is constituted of a refractive index ni layer 4 and a crystalline layer 2.

In the optical member having a refractive index ni layer between the substrate and the crystalline layer, the refractive index nb of the substrate, the refractive index ni of the refractive index ni layer, and the refractive index ns of the crystalline layer having a textured structure containing aluminum oxide crystals can satisfy a relationship of nb > ni > ns.

The refractive index ni layer 4 can be a transparent coating made of an inorganic material or an organic material.

Examples of the inorganic material include metal oxides such as $SiO_2$, $TiO_2$, $ZrO_2$, ZnO, and $Ta_2O_5$. Examples of the method of forming the refractive index ni layer 4 from an inorganic material include vacuum deposition such as vapor deposition and sputtering and a sol-gel method by application of a metal oxide precursor sol.

Examples of the organic material include acrylic resins, epoxy resins, oxetane resins, maleimide resins, melamine resins, benzoguanamine resins, phenol resins, resol resins, and polymers such as polycarbonate, polyester, polyacrylate, polyether, polyurea, polyurethane, polyamide, polyamide imide, polyimide, polyketone, polysulfone, polyphenylene, polyxylene, and polycycloolefin.

Formation of the refractive index ni layer 4 from an organic material is mainly performed by, for example, wet coating by application of a solution containing the organic material.

When the refractive index ni layer is formed by a wet process, a drying step may be appropriately performed.

Examples of the substrate used in the present invention include glass, plastic substrates, glass mirrors, and plastic mirrors.

Specific examples of the glass include alkali-containing glass, alkali-free glass, aluminosilicate glass, borosilicate glass, barium based glass, and lanthanum based glass.

Typical examples of the plastic substrate include films and molded products of thermoplastic resins such as polyester, triacetyl cellulose, cellulose acetate, polyethylene terephthalate, polypropylene, polystyrene, polycarbonate, polymethyl methacrylate, ABS resins, polyphenylene oxide, polyurethane, polyethylene, and polyvinyl chloride; and cross-linking films and crosslinked molded products prepared from various thermoplastic resins such as unsaturated polyester resins, phenol resins, cross-linking polyurethane, cross-linking acrylic resins, and cross-linking saturated polyester resins.

The substrate may have any shape as long as a shape according to the purpose of use can be eventually provided, and a flat plate, film, or a sheet is used as the substrate. The substrate may have a two-dimensional or three-dimensional curved surface.

EXAMPLES

Certain embodiments of the present invention will now be specifically described more specifically by the way of examples, but is not limited to the examples.

Optical members having fine protrusions on the surfaces prepared in Examples and Comparative Examples were evaluated by the following methods.

(1) Washing of substrate

Each of a series of flat circular substrates made of a glass base material having a diameter of about 30 mm and a thickness of about 2 mm was polished on one side, ultrasonic washed with an alkali detergent and IPA, and then dried in an oven.

(2) Preparation of aluminum oxide precursor sol liquid

A mixture of 14.8 g of aluminum-sec-butoxide (ASBD, manufactured by Kawaken Fine Chemical Co., Ltd.) and 0.5 molar equivalents of 3-methylacetylacetone (ACMAC) and 2-ethylbutanol based on the amount of the aluminum-sec-butoxide was stirred until a uniform mixture was formed. A solution of 0.01 M diluted hydrochloric acid in a solvent mixture of 2-ethylbutanol and 1-ethoxy-2-propanol was slowly added to the aluminum-sec-butoxide solution prepared above in an amount of 1.5 molar equivalents based on the amount of the aluminum-sec-butoxide, followed by stirring for a while. The amounts of the solvents were adjusted such that the final amount of the aluminum-sec-butoxide was 18.7 wt% and the mixture ratio of 2-ethylbutanol to 1-ethoxy-2-propanol was 7/3. The resulting solution was used as a precursor sol liquid for forming an aluminum oxide layer.

(3) Synthesis of polyimide

In total, 1.77 g of 4,4'-bis(4-aminophenoxy)biphenyl, 1.01 g of 4,4'-methylenebis(aminocyclohexane), and 0.62 g of 1,3-bis(aminopropyl)tetramethyldicycloxane were dissolved in 27.7 mL of N,N-dimethylacetamide (hereinafter, abbreviated to DMAc). To the resulting diamine solution was added 3.53 g of 4-(2,5-dioxotetrahydrofuran-3-yl)-1,2,3,4-tetrahydronaphthalene-1,2-dicarboxylic acid anhydride, with water cooling. The solution was stirred at room temperature for 15 hours for polymerization. The resulting solution was diluted with DMAc to 8 wt%, and 7.4 g of pyridine and 3.8 g of acetic anhydride were added thereto, followed by stirring at room temperature for 1 hour and then in an oil bath with heating at 70°C for 4 hours. The resulting polymer solution was reprecipitated in methanol to extract the polymer. The polymer was washed in methanol several times and was then dried in vacuum at 100°C to yield 5.9 g of polyimide as a light yellow powder. The remaining quantity of carboxyl groups was determined from the $^1$H-NMR spectrum to confirm an imidization ratio of 99%.

(4) Preparation of polyimide solution for refractive index ni layer

2.0 g of the polyimide powder synthesized above was added to 98 g of solvent mixture of cyclopentanone and cyclohexanone, followed by stirring at room temperature for complete dissolution. To this solution was added 0.04 g of (3-triethoxysilyl)propyl isocyanate. The mixture was stirred at room temperature for 2 hours. Furthermore, 0.2 g of deionized water was added thereto, followed by stirring for 1 hour to prepare a polyimide solution.

(5) Preparation of aqueous carboxylic acid compound solution

Aqueous carboxylic acid solutions containing carboxylic acid compounds at concentrations shown in Table 1 were prepared using deionized water.

(6) Measurement of absolute reflectance

Reflectance was measured at an incident angle of 0° of light in the wavelength range of 400 to 700 nm with an absolute reflectance measurement apparatus (USPM-RU, manufactured by Olympus Corp.). The average of reflectances in the wavelength range of 400 to 700 nm was defined as an average reflectance.

(7) Measurement of coating thickness and refractive index

Coating thicknesses and refractive indices were measured in the wavelength range of 380 to 800 nm with a spectroscopic ellipsometer (VASE, manufactured by J. A. Woollam Japan, Co., Inc.).

(8) Observation of substrate surface

The substrate surface was treated with Pd/Pt, and the surface was observed at an accelerating voltage of 2 kV using a field emission scanning electron microscope (FE-SEM) (S-4800, manufactured by Hitachi High-Technologies Corp.).

(9) High-temperature high-humidity accelerated test

As an example of endurance test, a high-temperature high-humidity accelerated test was performed by leaving test samples in a small size environmental tester (SH-241, manufactured by Espec Corporation) under environments of a temperature of 75°C and a humidity of 90% for 12 hours.

(10) Fourier transform infrared spectroscopy measurement

An example of the method of confirming that part or the entire of a crystalline layer 2 having a textured structure in the present invention contains a carboxylic acid compound will be described.

A crystalline layer 2 having a textured structure was produced on a Si wafer substrate. Subsequently, the crystalline layer 2 was treated so as to contain a carboxylic acid compound. The substrate was subjected to Fourier transform infrared spectroscopy (hereinafter, referred to as FT-IR, FTS7000e manufactured by Varian, Inc., USA) in the wavenumber of 450 to 4000 $cm^{-1}$ to confirm the peak of the carboxylic acid. The confirmation by FT-IR may be performed using a piece of the substrate surface prepared by scraping the substrate with a sharp knife or using a KBr pellet method.

Examples 1 to 5

An appropriate amount of polyimide solution 1 was dropped onto the polished surface of a washed glass A, of which main component is $La_2O_5$, having nd = 1.83 and vd = 42, followed by spin coating at 3000 to 4000 rpm. This substrate was dried at 200°C for 60 minutes to provide a substrate having a refractive index ni layer 4.

The thickness and the refractive index of the resulting refractive index ni layer 4 were measured with a spectroscopic ellipsometer. The thickness was 48 nm, and the refractive index n was 1.62.

An appropriate amount of the aluminum oxide precursor sol was dropped onto the surface of the refractive index ni layer 4, followed by spin coating at 4000 rpm for 20 seconds and then baking in an oven with internal air circulation at 200°C for 120 minutes. Thus, the refractive index ni layer 4 was covered with an amorphous aluminum oxide coating.

The thickness and the refractive index of the resulting amorphous aluminum oxide coating were measured with an ellipsometer. The thickness was 150 nm, and the refractive index n was 1.50.

The substrate was immersed in hot water of 75°C for 20 minutes and was then dried at 60°C for 15 minutes.

The absolute reflectance of the antireflection coating on the glass A was measured.

The surfaces of a part of the produced samples were investigated with an FE-SEM, and textured structures of crystals mainly composed of aluminum oxide formed randomly and intricately were observed.

60 mL of any of the aqueous carboxylic acid compound solutions 1 to 5 shown in Table 1 was dropped onto the surface of the resulting crystalline layer 2 having a textured structure, followed by spin coating at 3000 rpm for 20 seconds and then baking in an oven with internal air circulation at 100°C for 30 minutes.

The absolute reflectance of the antireflection coating on the glass A was measured. It was confirmed that the glass substrate provided with an antireflection coating having an absolute reflectance of 0.1% or less in the wavelength range of 400 to 700 nm was prepared. The reflectance after production of the crystalline layer 2 having a textured structure was compared with the reflectance after spin coating of the aqueous carboxylic acid compound solution and baking. As shown in Table 2, it was recognized that the reflectance was reduced in the wavelength range of 400 to 700 nm, in particular, significantly reduced on the shorter wavelength side. In Table 2, the difference between the reflectance measured after the production of the crystalline layer 2 having a textured structure and the reflectance after spin coating of the aqueous carboxylic acid compound solution and baking is titled as the amount of variation of reflectance after carboxylic acid compound treatment.

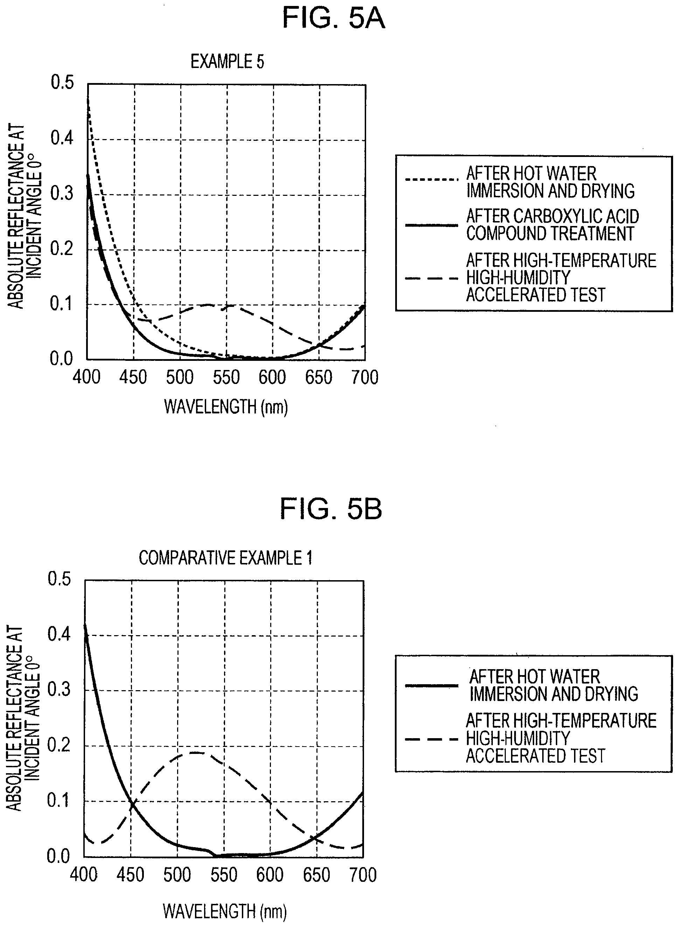

Fig. 5A is a graph showing absolute reflectances in the wavelength range of 400 to 700 nm of an antireflection coating formed on glass A in Example 5. The short dashed line shows the reflectance after immersion in hot water and drying but before carboxylic acid compound treatment, and the solid line shows the reflectance after carboxylic acid compound treatment.

Furthermore, the optical coating on the glass A was subjected to a high-temperature high-humidity accelerated test. The results are shown in Table 3. The amounts of variation of the reflectance at wavelengths of 400, 550, and 700 nm were small. The long dashed line in Fig. 5A shows the actual measurement data of reflectance after the high-temperature high-humidity accelerated test in Example 5.

Comparative Examples 1 to 3

The same process as that in Examples 1 to 5 was conducted except that, in Comparative Example 1, the crystalline layer 2 having a textured structure was not subjected to application of the aqueous carboxylic acid compound solution and baking and, in Comparative Examples 2 and 3, materials shown in Table 1 were used in place of aqueous carboxylic acid compound solutions 1 to 5.

As shown in Table 2, the reflectances after the treatment with the materials in Comparative Examples shown in Table 1 hardly varied in the wavelength range of 400 to 700 nm.

A high-temperature high-humidity accelerated test was performed as in Examples 1 to 5 to confirm the amounts of variation of the reflectance at wavelengths of 400, 550, and 700 nm. The results are shown in Table 3. The amount of variation of the reflectance highly varied to show insufficient antireflection performance. Fig. 5B shows the actual measurement data of reflectance in Comparative Example 1. The solid line shows the reflectance after immersion in hot water and drying but before the high-temperature high-humidity accelerated test, and the long dashed line shows the reflectance after the high-temperature high-humidity accelerated test.

Table 1

| Aqueous carboxylic acid solution | Carboxylic acid compound | Manufacturer | Concentration |
|---|---|---|---|
| aqueous carboxylic acid solution 1 | meso-butane-1,2,3,4-tetracarboxylic acid | Tokyo Chemical Industry Co., Ltd. | 0.075 wt% |
| aqueous carboxylic acid solution 2 | tetrahydrofuran-2,3,4,5-tetracarboxylic acid | Tokyo Chemical Industry Co., Ltd. | 0.075 wt% |
| aqueous carboxylic acid solution 3 | 1,2,3,4-cyclopentanetetracarboxylic acid | Tokyo Chemical Industry Co., Ltd. | 0.075 wt% |
| aqueous carboxylic acid solution 4 | phthalic acid | Tokyo Chemical Industry Co., Ltd. | 0.075 wt% |
| aqueous carboxylic acid solution 5 | citric acid | Kishida Chemical Co., Ltd. | 0.1 wt% |
| Comparative Example 2 | 0.01 M hydrochloric acid | Kishida Chemical Co., Ltd. | 1 mM |
| Comparative Example 3 | urea | Kishida Chemical Co., Ltd. | 0.1 wt% |

Table 2

| | Average reflectance in 400 to 700 nm | Amount of variation of reflectance after carboxylic acid compound treatment (+: increased reflectance, -: decreased reflectance) | | |
|---|---|---|---|---|
| | | 400 nm | 550 nm | 700 nm |
| Example 1 | 0.040 | -0.104 | +0.003 | -0.134 |
| Example 2 | 0.033 | -0.172 | -0.01 | -0.026 |
| Example 3 | 0.035 | -0.124 | +0.005 | -0.01 |
| Example 4 | 0.056 | -0.152 | +0.003 | +0.006 |
| Example 5 | 0.038 | -0.172 | ±0 | -0.006 |
| Example 6 | 0.909 | -0.010 | -0.063 | -0.042 |
| Comparative Example 1 | 0.066 | - | - | - |

(continued)

|  | Average reflectance in 400 to 700 nm | Amount of variation of reflectance after carboxylic acid compound treatment (+: increased reflectance, -: decreased reflectance) | | |
|---|---|---|---|---|
|  |  | 400 nm | 550 nm | 700 nm |
| Comparative Example 2 | 0.060 | -0.071 | -0.011 | +0.041 |
| Comparative Example 3 | 0.065 | -0.072 | +0.018 | +0.003 |
| Comparative Example 4 | 1.225 | +0.365 | +0.385 | -0.418 |

Table 3

|  | Average reflectance in 400 to 700 nm | Amount of variation of reflectance after high-temperature high-humidity accelerated test (+: increased reflectance, -: decreased reflectance) | | |
|---|---|---|---|---|
|  |  | 400 nm | 550 nm | 700 nm |
| Example 1 | 0.065 | -0.033 | +0.069 | -0.084 |
| Example 2 | 0.080 | -0.018 | +0.101 | -0.061 |
| Example 3 | 0.094 | +0.101 | +0.098 | -0.056 |
| Example 4 | 0.088 | +0.034 | +0.1 | -0.067 |
| Example 5 | 0.072 | +0.067 | +0.072 | -0.072 |
| Example 6 | 0.613 | -0.076 | -0.301 | -0.496 |
| Comparative Example 1 | 0.096 | -0.383 | +0.167 | -0.097 |
| Comparative Example 2 | 0.162 | -0.507 | +0.192 | -0.014 |

Example 6

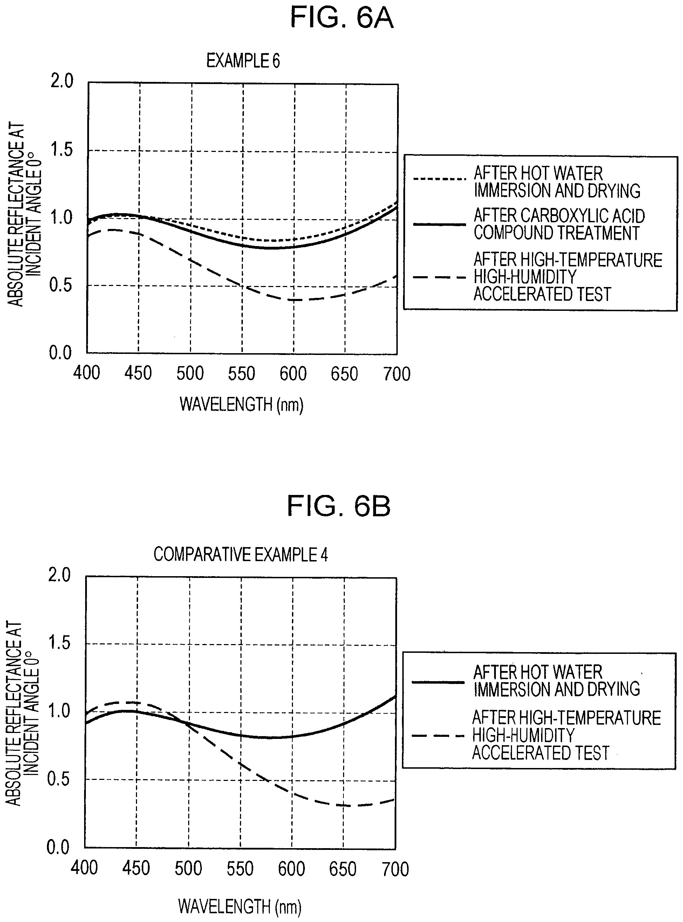

In Example 6, aqueous carboxylic acid compound solution 5 was used, and the same process as that in Examples 1 to 5 was conducted except that the step of forming the refractive index ni layer 4 was omitted. The reflectance after the treatment with aqueous carboxylic acid compound solution 5 decreased in the wavelength range of 400 to 700 nm. The results are shown in Table 2 and Fig. 6A. The short dashed line shows the reflectance after immersion in hot water and drying but before carboxylic acid compound treatment, and the solid line shows the reflectance after carboxylic acid compound treatment.

Furthermore, a high-temperature high-humidity accelerated test was performed. The amounts of variation of the reflectance at wavelengths of 400, 550, and 700 nm were small. The results are shown in Table 3 and in Fig. 6A where the long dashed line shows the results.

FT-IR measurement was performed. As a result, a broad peak from 1285 to 1450 $cm^{-1}$ with maximum at about 1380 $cm^{-1}$ and a broad peak from 1470 to 1700 $cm^{-1}$ with maximum at about 1597 $cm^{-1}$ were observed. It is believed that the former is the peak of the anti-symmetric stretching vibration of $COO^{-}$ bound to an aluminum ion, and the latter is the peak of C=O stretching vibration. The C=O stretching vibration of carboxylic acid is usually observed at about 1725 to 1700 $cm^{-1}$, but it is believed that occurrence of an intermolecular bond or weak binding of carboxylic acid to the hydroxyl group of aluminum hydroxide shifts the peak to the low wavenumber side. In addition, it is believed that the peak with maximum at about 1597 $cm^{-1}$ includes H-O-H bending vibration appearing at about 1615 $cm^{-1}$ derived from crystalline water in the aluminum oxide, resulting in a broad peak.

Comparative Example 4

The same process as that in Example 6 was conducted except that application of the aqueous carboxylic acid compound solution 5 and baking were omitted.

Furthermore, a high-temperature high-humidity accelerated test was performed. The amounts of variation of the reflectance at wavelengths of 400, 550, and 700 nm were large to show insufficient antireflection performance. Fig. 6B shows the actual measurement data of reflectance in Comparative Example 4. The solid line shows the reflectance after immersion in hot water and drying but before the high-temperature high-humidity accelerated test, and the long dashed line shows the reflectance after the high-temperature high-humidity accelerated test.

The optical member of the present invention has high antireflection performance and therefore can be utilized in an image pickup optical system used in a photographing lens such as a camera, a projection optical system used in, for example, a projector, or an observation optical system used in, for example, binoculars.

While the present invention has been described with reference to exemplary embodiments, it is to be understood that the invention is not limited to the disclosed exemplary embodiments. The scope of the following claims is to be accorded the broadest interpretation.

**Claims**

1. An optical member comprising an antireflection coating (10) disposed on a substrate (1), wherein

   the antireflection coating (10) has an outermost layer that is a crystalline layer (2) having a textured structure containing aluminum oxide crystals, wherein said textured structure is a nano structure having an apparent refractive index that is lower than the inherent refractive index of the material of the nano structure and that varies in the thickness direction of the coating,
   **characterized in that**
   the crystalline layer (2) further contains a carboxylic acid compound (3) which has two or more carboxyl groups in one molecule.

2. The optical member according to Claim 1, wherein the carboxylic acid compound (3) has, in addition to the carboxyl groups, at least one hydroxyl group in the molecule.

3. The optical member according to Claims 1 or 2, further comprising a refractive index layer (4) between the substrate (1) and the crystalline layer (2), wherein

   the refractive index nb of the substrate (1), the refractive index ni of the refractive index layer (4), and the refractive index ns of the crystalline layer (2) having the textured structure containing aluminum oxide crystals satisfy a relationship of nb > ni > ns.

4. The optical member according to Claim 1, wherein the carboxylic acid compound (3) is meso-butane-1,2,3,4-tetracarboxylic acid, tetrahydrofuran-2,3,4,5-tetracarboxylic acid, 1,2,3,4-cyclopentanetetracarboxylic acid, phthalic acid, or citric acid.

5. A method of producing an optical member having an antireflection coating (10) on a substrate (1), the method comprising:

   (a) forming an aluminum oxide layer (5) containing aluminum oxide on a substrate (1); and
   (b) forming a crystalline layer (2) having a textured structure by bringing the aluminum oxide layer (5) into contact with hot water of 60°C or more and 100°C or less, wherein said textured structure is a nano structure having an apparent refractive index that is lower than the inherent refractive index of the material of the nano structure and that varies in the thickness direction of the coating,

   **characterized by** further comprising:

   (c) applying a coating liquid containing a carboxylic acid compound (3) which has two or more carboxyl groups in one molecule and a solvent onto the crystalline layer (2); and
   (d) removing the solvent of the coating liquid.

6. The method of producing an optical member according to Claim 5, further comprising forming a refractive index layer (4) on the substrate (1), wherein

the aluminum oxide layer (5) containing aluminum oxide is formed on the refractive index layer (4).

**Patentansprüche**

1. Optisches Element umfassend eine auf einem Substrat (1) angeordnete Antireflexionsbeschichtung (10), wobei

   die Antireflexionsbeschichtung (10) eine äußerste Schicht aufweist, welche eine kristalline Schicht (2) mit einer Aluminiumoxidkristalle beinhaltenden texturierten Struktur ist, wobei die texturierte Struktur eine Nanostruktur mit einem offenbaren Brechungsindex ist, welcher niedriger ist als der inhärente Brechungsindex des Materials der Nanostruktur und welcher in der Dickenrichtung der Beschichtung variiert,
   **dadurch gekennzeichnet, dass**
   die kristalline Schicht (2) weiterhin eine Carbonsäureverbindung (3) beinhaltet, welche zwei oder mehr Carboxygruppen in einem Molekül aufweist.

2. Optisches Element nach Anspruch 1, wobei die Carbonsäureverbindung (3) zusätzlich zu den Carboxygruppen zumindest eine Hydroxylgruppe im Molekül aufweist.

3. Optisches Element nach Anspruch 1 oder 2, weiter umfassend eine Brechungsindexschicht (4) zwischen dem Substrat (1) und der kristallinen Schicht (2), wobei

   der Brechungsindex nb des Substrats (1), der Brechungsindex ni der Brechungsindexschicht (4) und der Brechungsindex ns der kristallinen Schicht (2) mit der Aluminiumoxidkristalle beinhaltenden texturierten Struktur eine Beziehung nb > ni > ns erfüllen.

4. Optisches Element nach Anspruch 1, wobei die Carbonsäureverbindung (3) Meso-Butan-1,2,3,4-Tetracarbonsäure, Tetrahydrofuran-2,3,4,5-Tetracarbonsäure, 1,2,3,4-Cyclopentantetracarbonsäure, Phthalsäure oder Zitronensäure ist.

5. Verfahren zum Herstellen eines optischen Elements mit einer Antireflexionsbeschichtung (10) auf einem Substrat (1), wobei das Verfahren umfasst:

   (a) Bilden einer Aluminiumoxid beinhaltenden Aluminiumoxidschicht (5) auf einem Substrat (1); und
   (b) Bilden einer kristallinen Schicht (2) mit einer texturierten Struktur durch In-Kontakt-Bringen der Aluminiumoxidschicht mit heißem Wasser von 60°C oder mehr und 100°C oder weniger, wobei die texturierte Struktur eine Nanostruktur mit einem offenbaren Brechungsindex ist, welcher niedriger ist als der inhärente Brechungsindex des Materials der Nanostruktur und welcher in der Dickenrichtung der Beschichtung variiert,

   **gekennzeichnet durch** weiter umfassend:

   (c) Aufbringen einer Beschichtungsflüssigkeit, die eine Carbonsäureverbindung (3) beinhaltet, welche zwei oder mehr Carboxygruppen in einem Molekül aufweist, sowie eines Lösungsmittels auf die kristalline Schicht (2); und
   (d) Entfernen des Lösungsmittels der Beschichtungsflüssigkeit.

6. Verfahren zum Herstellen eines optischen Elements nach Anspruch 5, weiter umfassend das Bilden einer Brechungsindexschicht (4) auf dem Substrat (1), wobei

   die Aluminiumoxid beinhaltende Aluminiumoxidschicht (5) auf der Brechungsindexschicht (4) gebildet wird.

**Revendications**

1. Elément optique comprenant un revêtement antiréfléchissant (10) disposé sur un substrat (1), dans lequel
   le revêtement antiréfléchissant (10) comporte une couche extérieure qui est une couche cristalline (2) ayant une structure texturée contenant des cristaux d'oxyde d'aluminium, ladite structure texturée étant une nanostructure ayant un indice de réfraction apparent inférieur à l'indice de réfraction intrinsèque du matériau de la nanostructure et variant dans la direction de l'épaisseur du revêtement,
   **caractérisé en ce que**

la couche cristalline (2) contient en outre un composé d'acide carboxylique (3) comportant deux groupes carboxyles ou plus dans une molécule.

2. Elément optique selon la revendication 1, dans lequel le composé d'acide carboxylique (3) comporte, en plus des groupes carboxyles, au moins un groupe hydroxyle dans la molécule.

3. Elément optique selon la revendication 1 ou 2, comprenant en outre une couche d'indice de réfraction (4) entre le substrat et la couche cristalline (2), dans lequel
l'indice de réfraction nb du substrat (1), l'indice de réfraction ni de la couche d'indice de réfraction (4) et l'indice de réfraction ns de la couche cristalline (2) ayant la structure texturée et contenant des cristaux d'oxyde d'aluminium satisfont à la relation suivante : nb > ni > ns.

4. Elément optique selon la revendication 1, dans lequel le composé d'acide carboxylique (3), est l'acide méso-butane-1,2,3,4-tétracarboxylique, l'acide tétrahydrofuran-2,3,4,5-tétracarboxylique, l'acide 1,2,3,4-cyclopentanetétracarboxylique, l'acide phtalique ou l'acide citrique.

5. Procédé de production d'un élément optique comprenant un revêtement antiréfléchissant (10) sur un substrat (1), le procédé consistant à :

(a) former une couche d'oxyde d'aluminium (5) contenant de l'oxyde d'aluminium sur un substrat (1) ; et
(b) former une couche cristalline (2) ayant une structure texturée en mettant en contact la couche d'oxyde d'aluminium (5) avec de l'eau chaude à 60°C ou plus et à 100°C ou moins, la structure texturée étant une nanostructure ayant un indice de réfraction apparent inférieur à l'indice de réfraction intrinsèque du matériau de la nanostructure et variant dans la direction de l'épaisseur du revêtement,

**caractérisé en ce qu'**il consiste en outre à .

(c) appliquer un liquide de revêtement contenant un composé d'acide carboxylique (3) comportant deux groupes carboxyles ou plus dans une molécule et un solvant sur la couche cristalline (2) ; et
(d) éliminer le solvant du liquide de revêtement.

6. Procédé de production d'un élément optique selon la revendication 5, consistant en outre à former une couche d'indice de réfraction (4) sur le substrat (1), dans lequel
la couche d'oxyde d'aluminium (5) contenant de l'oxyde d'aluminium est formée sur la couche d'indice de réfraction (4).

## FIG. 1A

## FIG. 1B

## FIG. 1C

# FIG. 2A

# FIG. 2B

# FIG. 3A

# FIG. 3B

# FIG. 3C

FIG. 4

# FIG. 5A

EXAMPLE 5

........... AFTER HOT WATER IMMERSION AND DRYING

──────── AFTER CARBOXYLIC ACID COMPOUND TREATMENT

─ ─ ─ AFTER HIGH-TEMPERATURE HIGH-HUMIDITY ACCELERATED TEST

# FIG. 5B

COMPARATIVE EXAMPLE 1

──────── AFTER HOT WATER IMMERSION AND DRYING

─ ─ ─ AFTER HIGH-TEMPERATURE HIGH-HUMIDITY ACCELERATED TEST

# FIG. 6A

EXAMPLE 6

ABSOLUTE REFLECTANCE AT INCIDENT ANGLE 0°

WAVELENGTH (nm)

......... AFTER HOT WATER IMMERSION AND DRYING

—— AFTER CARBOXYLIC ACID COMPOUND TREATMENT

– – AFTER HIGH-TEMPERATURE HIGH-HUMIDITY ACCELERATED TEST

# FIG. 6B

COMPARATIVE EXAMPLE 4

ABSOLUTE REFLECTANCE AT INCIDENT ANGLE 0°

WAVELENGTH (nm)

—— AFTER HOT WATER IMMERSION AND DRYING

– – AFTER HIGH-TEMPERATURE HIGH-HUMIDITY ACCELERATED TEST

# FIG. 7

# FIG. 8

020110    10.0 kV    X30.0 K    1.00 μm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2005275372 A
- JP 2006259711 A
- JP 2008203827 A
- JP 2008233880 A
- WO 2011140018 A1
- JP 9202649 A

### Non-patent literature cited in the description

- **M. E. KARAMAN et al.** *COLLOIDS AND SURFACES A: PHYSICOCHEMICAL AND ENGINEERING AS-PECTS,* 30 June 2001, vol. 182 (1-3), 285-298